# EUROPEAN PATENT SPECIFICATION

(11) **EP 4 050 223 B1**
(45) Date of publication and mention of the grant of the patent: **28.02.2024**
(21) Application number: 22152025.7
(22) Date of filing: 18.01.2022
(51) Int. Cl.: F04D 29/60, F04D 29/66, F16L 27/111, F16L 55/033

(54) **PIPING STRUCTURE AND COMPRESSOR SYSTEM**
ROHRSTRUKTUR UND VERDICHTERSYSTEM
STRUCTURE DE TUYAUTERIE ET SYSTÈME DE COMPRESSEUR

(30) Priority: 25.02.2021 JP 2021028521
(43) Date of publication of application: 31.08.2022
(73) Proprietor: Mitsubishi Heavy Industries Compressor Corporation, Tokyo 108-0014 (JP)
(72) Inventor: MIYATA, Hiroyuki, Hiroshima, 733-8553 (JP); KOBAYASHI, Masahiro, Hiroshima, 733-8553 (JP); FUJII, Masayuki, Hiroshima, 733-8553 (JP)
(74) Representative: Studio Torta S.p.A.

(56) References cited:
- EP-A2- 0 282 689
- EP-A2- 2 147 780
- DE-U1-202010 006 231
- GB-A- 2 299 636
- JP-A- 2013 124 748

## Description

### BACKGROUND OF THE INVENTION

### Field of the Invention

The present disclosure relates to a piping structure and a compressor system.

### Description of Related Art

For example, in Japanese Unexamined Patent Application First Publication No. 2008-215607, a piping structure in which a bellows is provided between a pair of pipes is disclosed. When the pair of pipes relatively moves in an axial direction or a radial direction, the bellows as an expansion joint expands and contracts or bends according to a displacement of the relative movement. Accordingly, the displacement between the pipes is absorbed. Prior art documents are, EP 0 282 689 A2, DE 20 2010 006231 U1, JP 2013 124748 A, EP 2 147 780 A2 and GB 2 299 636 A.

### SUMMARY OF THE INVENTION

In a case where a fluid flowing through the pipe pulsates, an excitation force of the fluid is applied to the bellows itself facing a flow path. Accordingly, when repeated stress acts on the bellows for a long period of time, there is a problem that deterioration of the bellows over time becomes faster and fatigue fracture occurs during operation.

The present disclosure provides a piping structure capable of reducing the excitation force applied to the bellows without impairing a function of the bellows, and a compressor system using the same.

According to the present invention, there is provided a piping structure as defined in claim 1.

According to another aspect of the present disclosure, there is provided a compressor system including: a compressor; a gas cooler that cools gas compressed by the compressor; and a connection pipe that guides the gas compressed by the compressor to the gas cooler by connecting the compressor and the gas cooler, in which at least one of a connection structure between the compressor and the connection pipe and a connection structure between the gas cooler and the connection pipe is the piping structure.

According to the present disclosure, it is possible to provide a piping structure capable of reducing the excitation force applied to the bellows without impairing the function of the bellows, and a compressor system using the same.

### BRIEF DESCRIPTION OF THE DRAWINGS

FIG. 1 is a diagram showing a schematic configuration of a compressor system according to an embodiment of the present disclosure.
FIG. 2 is a longitudinal cross-sectional view showing an outline of a piping structure in the compressor system according to the embodiment of the present disclosure.

### DETAILED DESCRIPTION OF THE INVENTION

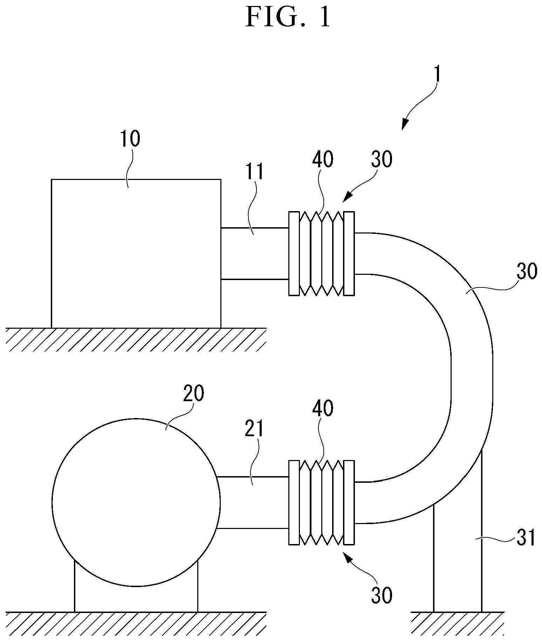

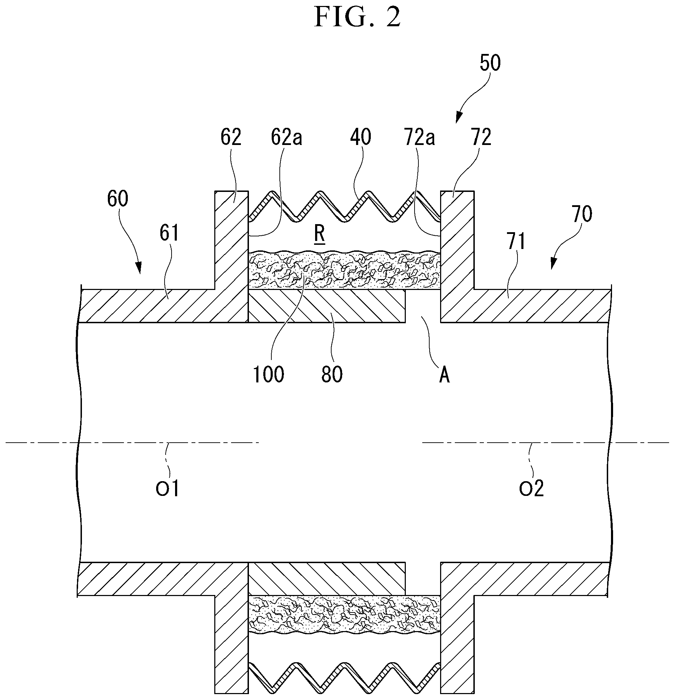

Hereinafter, an embodiment of the present invention will be described in detail with reference to FIGS. 1 and 2. As shown in FIG. 1, a compressor system 1 according to the embodiment includes a compressor 10, a gas cooler 20, a connection pipe 30, and a bellows 40 as an expansion joint.

### <Compressor>

The compressor 10 compresses and discharges gas supplied from an outside. The compressor 10 is rotationally driven by a drive unit (not shown) and compresses the gas by an impeller (not shown).

The compressor 10 is fixed to a floor surface, a base plate, or the like. The gas discharged from the compressor 10 flows through a compressor pipe 11 integrally fixed to the compressor 10 and is guided to the outside.

### <Gas cooler>

The gas cooler 20 cools the gas discharged from the compressor 10. The gas guided into the gas cooler 20 exchanges heat with a cooling water via a heat exchanger provided in the gas cooler 20. In this way, the cooled gas is discharged from the gas cooler 20 and guided to the next process. The compressor 10 may have a configuration that the compressor 10 has a plurality of compression stages, and after the gas discharged at a low-pressure compression stage is cooled at the gas cooler 20, the gas is introduced into a high-pressure compression stage.

The gas cooler 20 is fixed to the floor surface, the base plate, or the like. The gas cooler 20 may be modularized as the whole compressor system 1 by being fixed to the same base plate as the compressor 10.

The compressed gas is introduced into the gas cooler 20 via a gas cooler pipe 21 integrally fixed to the gas cooler 20.

### <Connection pipe>

The connection pipe 30 is a pipe that guides the gas flowing through the compressor pipe 11 to the gas cooler pipe 21. The connection pipe 30 is supported by a support member 31 which is fixed to the floor surface or the base plate. The connection pipe 30 may be fixed to the base plate on which the compressor 10 or the gas cooler 20 is installed.

An upstream end, which is one end of the connection pipe 30, is connected to the compressor pipe 11 via the bellows 40. A downstream end, which is a second end of the connection pipe 30, is connected to the gas cooler pipe 21 via the bellows 40.

### <Piping structure>

Next, the piping structure 50 of the embodiment will be described in detail with reference to FIG. 2. The piping structure 50 includes the bellows 40, and a first pipe 60 and a second pipe 70 connected by the bellows 40.

In the embodiment, two piping structures 50 are provided as shown in FIG. 1. In one piping structure 50, the compressor pipe 11 is the first pipe 60, and the second pipe 70 is the connection pipe 30. In the other piping structure 50, the connection pipe 30 is the first pipe 60, and the gas cooler pipe 21 is the second pipe 70.

In addition to the above configuration, the piping structure 50 includes an inner cylinder 80 and an excitation force reducing portion 100.

### <First pipe>

The first pipe 60 includes a first pipe main body 61 and a first flange 62.

### <First pipe main body>

The first pipe main body 61 has a tubular shape centered on a first axis O1 and has a cylindrical shape in the embodiment. The gas flows from one side in a first axis O1 direction (left side in FIG. 2) to the other side in the first axis O1 direction (right side in FIG. 2) using a space inside the first pipe main body 61 as a part of a flow path. That is, one side in the first axis O1 direction is an upstream side of a fluid flow direction, and the other side in the first axis O1 direction is a downstream side of the fluid flow direction.

### <First flange>

The first flange 62 projects from a downstream end portion of the first pipe main body 61 to a radial outside of the first axis O1, that is, to an outer peripheral side. The first flange 62 has a disk shape centered on the first axis O1. A face of the first flange 62 facing the downstream side is a first end face 62a having a planar shape orthogonal to the first axis O1.

### <Second pipe>

The second pipe 70 is disposed on the downstream side of the first pipe 60 at a distance from the first pipe 60. The second pipe 70 includes a second pipe main body 71 and a second flange 72.

### <Second pipe main body>

The second pipe main body 71 has a tubular shape centered on a second axis O2, and has a cylindrical shape in the embodiment. An outer diameter and an inner diameter of the second pipe main body 71 are the same as an outer diameter and an inner diameter of the first pipe 60. The second pipe main body 71 is disposed in the same posture on the downstream side of the first pipe 60. That is, the second axis O2 is located on an extension line on the downstream side of the first axis O1.

The gas flows from one side in a second axis O2 direction to the other side in the second axis O2 direction through the space inside the second pipe main body 71 as a part of the flow path. That is, one side in the second axis O2 direction is the upstream side of the fluid flow direction, and the other side in the second axis O2 direction is the downstream side of the fluid flow direction.

### <Second flange>

The second flange 72 projects from the upstream end portion of the second pipe main body 71 to the radial outside of the second axis O2, that is, to an outer peripheral side. The second flange 72 has a disk shape centered on the second axis O2. A face of the second flange 72 facing the upstream side is a second end face 72a having a planar shape orthogonal to the second axis O2.

The first end face 62a of the first flange 62 and the second end face 72a of the second flange 72 face each other in a gas flow direction.

### <Inner cylinder>

The inner cylinder 80 has a tubular shape provided integrally with the first pipe 60, and has a cylindrical shape in the embodiment. A central axis of the inner cylinder 80 coincides with the first axis O1 which is the central axis of the first pipe main body 61. An outer diameter and an inner diameter of the inner cylinder 80 are the same as those of the first pipe main body 61. The space inside the inner cylinder 80 is also a gas flow path, as the space inside the first pipe main body 61 and the space inside the second pipe main body 71.

The upstream end portion of the inner cylinder 80 is integrally fixed to the downstream end portion of the first pipe main body 61 in a circumferential direction. The inner cylinder 80 may have an integral structure with the first pipe 60, that is, a part of the downstream side of the first pipe 60 may be the inner cylinder 80. In this case, the first flange 62 is provided at a position spaced away from the downstream end portion of the first pipe 60 toward the upstream side on the outer peripheral surface of the first pipe 60.

The downstream end portion of the inner cylinder 80 faces the upstream end portion of the second pipe 70 at a distance. That is, the downstream end portion of the inner cylinder 80 faces the upstream end portion of the second pipe main body 71 at a distance in the circumferential direction. Accordingly, an opening portion A having a slit shape and extending over the entire circumferential direction is formed between the downstream end portion of the inner cylinder 80 and the upstream end portion of the second pipe main body 71.

### <Bellows>

The bellows 40 is provided over the first flange 62 and the second flange 72. The bellows 40 is made of a metal having high corrosion resistance, such as stainless steel. The bellows 40 has a cylindrical shape that surrounds the flow path from the outer peripheral side. The bellows 40 has a bellows shape that extends continuously so that a reduced diameter portion having a small outer diameter and inner diameter and an enlarged diameter portion having a large outer diameter and inner diameter are alternately repeated toward a central axis direction. Accordingly, the bellows 40 can be optionally expanded and contracted and bent.

An upstream end portion of the bellows 40 is fixed to a part of the outer peripheral side of the first end face 62a of the first flange 62 over the entire circumference. A downstream end portion of the bellows 40 is fixed to a part of the outer peripheral side of the second end face 72a of the second flange 72 over the entire circumference.

An accommodation chamber R, which is a space having an annular shape and surrounding the flow path from the outer peripheral side, is partitioned by the first end face 62a, the second end face 72a, the outer peripheral surface of the inner cylinder 80, and the inner peripheral surface of the bellows 40. The accommodation chamber R communicates with the flow path over the entire circumference through the opening portion A at the downstream side and radial inner end portion.

### <Excitation force reducing portion>

The excitation force reducing portion 100 is provided in the accommodation chamber R. The excitation force reducing portion 100 is formed of a stretchable porous material. In the embodiment, steel wool is used as the excitation force reducing portion 100. Accordingly, the excitation force reducing portion 100 can be expanded and contracted and deformed. In addition, the space between crimped fibers constituting the steel wool as the excitation force reducing portion 100 functions as a porous.

The excitation force reducing portion 100 is arranged in an annular shape that surrounds the flow path from the outer peripheral side and a tubular shape that extends in the flow direction of the flow path. The upstream end portion (first end) of the excitation force reducing portion 100 is fixed to a part of the first end face 62a of the first flange 62 on the radial inner side over the entire circumferential direction. The downstream end portion (second end) of the excitation force reducing portion 100 is fixed to a part of the second end face 72a of the second flange 72 on the radial inner side over the entire circumferential direction. The excitation force reducing portion 100 is fixed to the first end face 62a and the second end face 72a via an adhesive or the like.

Since the excitation force reducing portion 100 is disposed as described above, the flow path of the gas and the bellows 40 are separated by the excitation force reducing portion 100.

The excitation force reducing portion 100 is disposed apart from the bellows 40 in the radial direction. That is, an outer peripheral portion of the excitation force reducing portion 100 is separated radially inside from the inner peripheral surface of the bellows 40 in the gas flow direction. Accordingly, a space having an annular shape is formed between the excitation force reducing portion 100 and the bellows 40 in the gas flow direction.

The inner peripheral portion of the excitation force reducing portion 100 may be in contact with or fixed to the outer peripheral surface of the inner cylinder 80. In addition, the inner peripheral portion of the excitation force reducing portion 100 may be disposed apart from the outer peripheral surface of the inner cylinder 80 to the radial outside. In this case, a space having an annular shape is also formed between the excitation force reducing portion 100 and the inner cylinder 80.

### <Operational Effect>

When the compressor 10 is driven, the compressor pipe 11 which is integrally provided with the compressor 10 vibrates due to the vibration of the compressor 10. When the gas flows in the gas cooler 20, the gas cooler 20 vibrates, and the gas cooler pipe 21 provided in the gas cooler 20 vibrates. Furthermore, even when the compressor 10 and the gas cooler 20 are disposed on the same base plate, the vibration of the compressor 10 is transmitted to the gas cooler 20, and the gas cooler pipe 21 vibrates. Accordingly, in a case where the compressor pipe 11 and the gas cooler pipe 21 are displaced, the bellows 40 expands and contracts and bends following the displacement. In this case, since the displacement of the compressor pipe 11 and the gas cooler pipe 21 are absorbed, an inadvertent external force is not transmitted to the connection pipe 30, and soundness of the connection pipe 30 can be ensured.

Here, a blade (rectifying vane) having a rectifying function of alternating the gas compressed by the compressor 10 is provided, the pressure fluctuation occurs in the gas to be compressed. The pressure fluctuation of the gas acts as an excitation force over the entire flow path of the gas together with the flow of the gas. When the excitation force acts on the bellows 40, stress is repeatedly generated in the bellows 40. Accordingly, as deterioration of the bellows 40 over time becomes faster, the fatigue fracture occurs during operation.

Considering the above, in the embodiment, the excitation force reducing portion 100 that separates the bellows 40 and the flow path is provided in the accommodation chamber R between the bellows 40 and the flow path. Accordingly, the excitation force based on the pressure fluctuation of the gas flowing through the flow path is absorbed by the excitation force reducing portion 100.

That is, since the excitation force reducing portion 100 as a porous material has a large surface area, the pressure fluctuation of the gas is absorbed by the excitation force reducing portion 100. Accordingly, it is possible to prevent the excitation force based on the pressure fluctuation from directly acting on the bellows 40.

Furthermore, since the excitation force reducing portion 100 has stretchability, the excitation force reducing portion 100 does not hinder the expansion and contraction and bending of the bellows 40, and deforms following the bellows 40. Therefore, the original function of the bellows 40, such as absorbing the displacement, can be ensured without hindering the role of the bellows 40 as the expansion joint.

For the purpose of simply improving durability against the excitation force of the bellows 40, it is conceivable to improve strength by increasing the thickness of the bellows 40. In this case, stretchability and deformability of the bellows 40 are hindered, and the original purpose of the bellows 40 cannot be achieved.

The above problem can be solved by providing the excitation force reducing portion 100 as a porous material having the stretchability between the bellows 40 and the flow path as in the embodiment.

In addition, the excitation force reducing portion 100 has an annular shape so that the flow path and the bellows 40 are separated from each other over the entire circumference by the excitation force reducing portion 100. The excitation force transmitted to the bellows 40 can be appropriately reduced, and the excitation force transmitted to the bellows 40 can be effectively suppressed.

Since the bellows 40 and the excitation force reducing portion 100 are separated in the radial direction, a space is formed therebetween. Therefore, the excitation force that has not been completely absorbed by the excitation force reducing portion 100 can be dispersed and absorbed in the space. Accordingly, the excitation force transmitted to the bellows 40 can be further reduced.

### <Other Embodiments>

Although the embodiment according to the present invention has been described above, the present invention is not limited thereto, and can be appropriately modified within the scope of the invention, which is defined by the appended claims.

For example, in the embodiment, although an example in which steel wool is used as the excitation force reducing portion 100 has been described, the present invention is not limited to this.

In addition to steel wool, the excitation force reducing portion 100 may be configured to use metallic wool using metal fibers, such as titanium, nickel, copper, and aluminum.

Furthermore, as the excitation force reducing portion 100, a fiber aggregate formed of inorganic fibers can be adopted. As the inorganic fiber, carbon fiber, glass fiber, and metal fiber are exemplary examples. As the fiber aggregate, in addition to the wool structure as described above, a fiber sheet with a woven fabric or a non-woven fabric can be used.

Even with these, the excitation force can be absorbed by the slight gap functioning as a porous as in the embodiment. In addition, since the deformation as the bellows 40 expands and contracts and deforms does not hinder the movement of the bellows 40, the function of the bellows 40 can be ensured.

In addition to the above configuration, the excitation force reducing portion 100 may be formed of any other material as long as it is a porous material having the stretchability.

Furthermore, although an example in which the piping structure 50 is applied to both the connection structure between the compressor pipe 11 and the first pipe 60 and the connection structure between the second pipe 70 and the connection pipe 30 has been described, the piping structure 50 may be applied to only one of them. The piping structure 50 may be adopted as a connection structure between other pipes in the compressor system 1.

In the embodiment, although an example in which the piping structure 50 is applied to the compressor system 1 has been described, the piping structure 50 may be applied to another machine.

### <Additional Remark>

According to the present invention defined in claim 1, the excitation force of the fluid passing through the first pipe 60 and the second pipe 70 is absorbed by the excitation force reducing portion 100 provided between the bellows 40 and the flow path. Therefore, the excitation force exerted on the bellows 40 can be suppressed.

In addition, since the excitation force reducing portion 100 has the stretchability, the excitation force reducing portion 100 does not hinder the expansion and contraction and bending of the bellows 40, and deforms following the bellows 40. Therefore, the role of the bellows 40 as the expansion joint is not hindered.

Furthermore, the flow path and the bellows 40 are separated over the entire circumference, so that the excitation force transmitted to the bellows 40 can be reduced more appropriately.

Since the bellows 40 and the excitation force reducing portion 100 are separated in the radial direction, a space is formed therebetween. Therefore, the excitation force that has not been completely absorbed by the excitation force reducing portion 100 can be dispersed in the space, and the excitation force transmitted to the bellows 40 can be reduced as much as possible.

In the preferred embodiment of claim 2, the excitation force reducing portion 100 is a fiber aggregate formed of inorganic fibers.

Accordingly, the excitation force of the fluid transmitted to the bellows 40 can be appropriately reduced.

In the further preferred embodiment of claim 3, the fiber aggregate is metallic wool.

Accordingly, the excitation force of the fluid transmitted to the bellows 40 can be appropriately reduced.

In another preferred embodiment, there is provided a compressor system according to claim 4.

### INDUSTRIAL APPLICABILITY

According to the present disclosure, it is possible to provide a piping structure capable of reducing the excitation force applied to the bellows without impairing the function of the bellows, and a compressor system using the same.

### EXPLANATION OF REFERENCES

1: compressor system
10: compressor
11: compressor pipe
20: gas cooler
21: gas cooler pipe
30: connection pipe
31: support member
40: bellows
50: piping structure
60: first pipe
61: first pipe main body
62: first flange
62a: first end face
70: second pipe
71: second pipe main body
72: second flange
72a: second end face
80: inner cylinder
100: excitation force reducing portion
A: opening portion
R: accommodation chamber
O1: first axis
O2: second axis

## Claims

1. A piping structure (50) comprising:
a first pipe (60) including a first pipe main body (61) that forms a part of a flow path therein and a first flange (62) that projects from the first pipe main body (61) to an outer peripheral side;
a second pipe (70) including a second pipe main body (71) that forms a part of the flow path therein and a second flange (72) that projects from the second pipe main body (71) to an outer peripheral side and faces the first flange (62);
a bellows (40) disposed to surround an entire circumference between the first flange (62) and the second flange (72); and
an excitation force reducing portion (100) disposed to separate the flow path and the bellows (40) in a space between the first flange (62) and the second flange (72), and formed of a stretchable porous material,
wherein a first end of the excitation force reducing portion (100) is fixed to the first flange (62) and a second end of the excitation force reducing portion (100) is fixed to the second flange (72),
**characterized in that**
the excitation force reducing portion (100) is disposed inside the bellows (40) in a radial direction at a distance from the bellows (40) and has an annular shape that surrounds the flow path,
an outer peripheral portion of the excitation force reducing portion (100) is separated radially inside from an entire inner peripheral surface of the bellows (40) in a gas flow direction, which is a direction in which the gas flows inside the piping structure (50), and
a space having an annular shape is formed over an entire area between the excitation force reducing portion (100) and the bellows in the gas flow direction.

2. The piping structure (50) according to Claim 1, wherein the excitation force reducing portion (100) is a fiber aggregate formed of inorganic fibers.

3. The piping structure (50) according to Claim 2, wherein the fiber aggregate is metallic wool.

4. A compressor system comprising:
a compressor (10);
a gas cooler (20) that is configured to cool gas compressed by the compressor (10); and
a connection pipe (30) that is configured to guide the gas compressed by the compressor (10) to the gas cooler (20) by connecting the compressor (10) and the gas cooler (20),
wherein at least one of a connection structure between the compressor (10) and the connection pipe (30) and a connection structure between the gas cooler (20) and the connection pipe (30) is a piping structure (50) according to any one of Claims 1 to 3.

## Patentansprüche

1. Rohrleitungsstruktur (50), die Folgendes umfasst:
ein erstes Rohr (60), das einen ersten Rohrhauptkörper (61), der darin einen Teil eines Strömungspfades bildet, und einen ersten Flansch (62), der von dem ersten Rohrhauptkörper (61) zu einer äußeren Umfangsseite vorsteht, enthält;
ein zweites Rohr (70), das einen zweiten Rohrhauptkörper (71), der darin einen Teil eines Strömungspfades bildet, und einen zweiten Flansch (72), der von dem zweiten Rohrhauptkörper (71) zu einer äußeren Umfangsseite vorsteht und dem ersten Flansch (62) zugewandt ist, enthält;
einen Faltenbalg (40), der angeordnet ist, um einen gesamten Umfang zwischen dem ersten Flansch (62) und dem zweiten Flansch (72) zu umgeben; und
einen Abschnitt (100) zur Verringerung einer Anregungskraft, der angeordnet ist, um den Strömungspfad und den Faltenbalg (40) in einem Raum zwischen dem ersten Flansch (62) und dem zweiten Flansch (72) zu trennen, und aus einem dehnbaren porösen Material gebildet ist, wobei ein erstes Ende des Abschnitts (100) zur Verringerung einer Anregungskraft an dem ersten Flansch (62) befestigt ist und ein zweites Ende des Abschnitts (100) zur Verringerung einer Anregungskraft an dem zweiten Flansch (72) befestigt ist,
**dadurch gekennzeichnet, dass**
der Abschnitt (100) zur Verringerung einer Anregungskraft in dem Faltenbalg (40) in einer radialen Richtung mit einem Abstand von dem Faltenbalg (40) angeordnet ist und eine Ringform aufweist, die den Strömungspfad umgibt,
ein Außenumfangsabschnitt des Abschnitts (100) zur Verringerung einer Anregungskraft radial innen von einer gesamten Innenumfangsfläche des Faltenbalgs (40) in einer Gasströmungsrichtung, die einer Richtung entspricht, in die das Gas in der Rohrleitungsstruktur (50) strömt, getrennt ist, und
ein Raum, der eine Ringform aufweist, über einen gesamten Bereich zwischen dem Abschnitt (100) zur Verringerung einer Anregungskraft und dem Faltenbalg in der Gasströmungsrichtung gebildet ist.

2. Rohrleitungsstruktur (50) nach Anspruch 1, wobei der Abschnitt (100) zur Verringerung einer Anregungskraft ein Faseraggregat ist, das aus anorganischen Fasern gebildet ist.

3. Rohrleitungsstruktur (50) nach Anspruch 2, wobei das Faseraggregat Metallwolle ist.

4. Kompressorsystem, das Folgendes umfasst:
einen Kompressor (10);
einen Gaskühler (20), der konfiguriert ist, Gas, das von dem Kompressor (10) komprimiert worden ist, zu kühlen; und
ein Verbindungsrohr (30), das konfiguriert ist, durch Verbinden des Kompressors (10) und des Gaskühlers (20) das von dem Kompressor (10) komprimierte Gas zu dem Gaskühler (20) zu leiten,
wobei eine einer Verbindungsstruktur zwischen dem Kompressor (10) und dem Verbindungsrohr (30) und/oder einer Verbindungsstruktur zwischen dem Gaskühler (20) und dem Verbindungsrohr (30) eine Rohrleitungsstruktur (50) nach einem der Ansprüche 1 bis 3 ist.

## Revendications

1. Structure de tuyauterie (50) comprenant :
un premier tuyau (60) incluant un corps principal (61) de premier tuyau qui forme une partie d'un trajet d'écoulement à l'intérieur de celui-ci et une première bride (62) qui fait saillie à partir du corps principal (61) de premier tuyau vers un côté périphérique externe ;
un deuxième tuyau (70) incluant un corps principal (71) de deuxième tuyau qui forme une partie d'un trajet d'écoulement à l'intérieur de celui-ci et une deuxième bride (72) qui fait saillie à partir du corps principal (71) de deuxième tuyau vers un côté périphérique externe et fait face à la première bride (62) ;
un soufflet (40) disposé de façon à entourer une circonférence entière entre la première bride (62) et la deuxième bride (72) ; et
une portion de réduction de force d'excitation (100) disposée pour séparer le trajet d'écoulement et le soufflet (40) dans un espace entre la première bride (62) et la deuxième bride (72), et formée d'un matériau poreux étirable,
où une première extrémité de la portion de réduction de force d'excitation (100) est fixée à la première bride (62) et une deuxième extrémité de la portion de réduction de force d'excitation (100) est fixée à la deuxième bride (72),
**caractérisée en ce que**
la portion de réduction de force d'excitation (100) est disposée à l'intérieur du soufflet (40) dans une direction radiale à une certaine distance du soufflet (40) et a une forme annulaire qui entoure le trajet d'écoulement,
une portion périphérique externe de la portion de réduction de force d'excitation (100) est séparée radialement à l'intérieur d'une surface périphérique interne entière du soufflet (40) dans une direction d'écoulement de gaz, qui est une direction dans laquelle le gaz s'écoule à l'intérieur de la structure de tuyauterie (50), et
un espace ayant une forme annulaire est formé sur une zone entière entre la portion de réduction de force d'excitation (100) et le soufflet dans la direction d'écoulement de gaz.

2. Structure de tuyauterie (50) selon la revendication 1, où la portion de réduction de force d'excitation (100) est un agrégat de fibres formé de fibres inorganiques.

3. Structure de tuyauterie (50) selon la revendication 2, où l'agrégat de fibres est de la laine métallique.

4. Système de compresseur comprenant :
un compresseur (10) ;
un refroidisseur de gaz (20) qui est configuré pour refroidir le gaz comprimé par le compresseur (10) ; et
un tuyau de raccordement (30) qui est configuré pour guider le gaz comprimé par le compresseur (10) vers le refroidisseur de gaz (20) en raccordant le compresseur (10) et le refroidisseur de gaz (20),
où au moins une structure de raccordement parmi le compresseur (10) et le tuyau de raccordement (30) et une structure de raccordement parmi le refroidisseur de gaz (20) et le tuyau de raccordement (30) est une structure de tuyauterie (50) selon l'une quelconque des revendications 1 à 3.
